(19) Europäisches Patentamt / European Patent Office / Office européen des brevets

(11) EP 1 881 277 A1

(12) **EUROPEAN PATENT APPLICATION**
published in accordance with Art. 153(4) EPC

(43) Date of publication:
23.01.2008 Bulletin 2008/04

(51) Int Cl.:
*F24F 11/02* (2006.01)

(21) Application number: 06731684.4

(22) Date of filing: 12.04.2006

(86) International application number:
PCT/JP2006/307738

(87) International publication number:
WO 2006/112323 (26.10.2006 Gazette 2006/43)

(84) Designated Contracting States:
AT BE BG CH CY CZ DE DK EE ES FI FR GB GR HU IE IS IT LI LT LU LV MC NL PL PT RO SE SI SK TR

(30) Priority: 18.04.2005 JP 2005119540

(71) Applicant: DAIKIN INDUSTRIES, LTD.
Osaka-shi, Osaka 530-8323 (JP)

(72) Inventors:
• SANGENYA, Hideki,
Daikin Ind. Ltd. Shiga Plant.
Kusatsu-shi, Shiga 5258526 (JP)
• KITAGAWA, Takeshi,
Daikin Ind. Ltd. Shiga Plant.
Kusatsu-shi, Shiga 5258526 (JP)

(74) Representative: HOFFMANN EITLE
Patent- und Rechtsanwälte
Arabellastrasse 4
81925 München (DE)

(54) **AIR CONDITIONER**

(57) A frequency control of a compressor is performed in an air conditioner in which a plurality of indoor units are connected to an outdoor unit. The air conditioner is an air conditioner comprising an outdoor unit having a compressor and a plurality of indoor units connected to the outdoor unit and each independently capable of switching between thermo ON/OFF states, the air conditioner comprising a total capacity value obtaining means (62), a change amount setting means (63), and a fre-
quency changing means (64). The total capacity value obtaining means (62) obtains a total capacity value of the indoor units in the thermo ON state among the plurality of indoor units. The change amount setting means (63) sets an amount of change in the frequency of the compressor according to the total capacity value. The frequency changing means (64) changes the frequency of the compressor for each amount of change set by the change amount setting means.

Fig. 3

**Description**

**TECHNICAL FIELD**

The present invention relates to an air conditioner.

**BACKGROUND ART**

With a conventional air conditioner, there is a case where a control to gradually increase or decrease the frequency of a compressor such that the evaporation pressure or the condensation pressure of the compressor at the activation time approaches the target value (see Patent Document 1). For example, after the frequency gradually increases due to the activation of the compressor and the condensation pressure increases to a certain value, the frequency is increased by a predetermined frequency at predetermined time intervals such that the condensation pressure becomes a target value. When the condensation pressure increases together with the increase in the frequency and exceeds the target value, the frequency is decreased by a predetermined frequency at predetermined time intervals such that the condensation pressure again becomes the target value. In this way, by controlling the frequency of the compressor, the evaporation pressure can be brought closer to the target value.
<Patent Document 1>
Japanese Patent Application Publication No. 2000-241001

**DISCLOSURE OF THE INVENTION**

<PROBLEM TO BE SOLVED BY THE INVENTION>

However, with an air conditioner in which a plurality of indoor units are connected to an outdoor unit, the number of the indoor units in the thermo ON state changes. Consequently, the required capacity changes relatively largely. Accordingly, when the control as described above is performed, it is difficult to bring the evaporation pressure or the condensation pressure closer to the target value since the required capacity changes, and the frequency control of the compressor may become unstable. In addition, when the increase in the frequency is reduced in order to stably control the frequency of the compressor, it will take a long time until the target value is reached.
It is therefore an object of the present invention to perform a stable frequency control of a compressor in an air conditioner in which a plurality of indoor units are connected to an outdoor unit.

<MEANS TO SOLVE THE PROBLEM>

An air conditioner according to a first aspect of the present invention is an air conditioner comprising an outdoor unit having a compressor and a plurality of indoor units connected to the outdoor unit and each independently capable of switching between thermo ON/OFF states, the air conditioner comprising a total capacity value obtaining means, a change amount setting means, and a frequency changing means. The total capacity value obtaining means obtains a total capacity value of the indoor units in the thermo ON state among the plurality of indoor units. The change amount setting means sets an amount of change in the frequency of the compressor according to the total capacity value. The frequency changing means changes the frequency of the compressor for each amount of change set by the change amount setting means.
With this air conditioner, the total capacity value of the indoor units in the thermo ON state among the plurality of indoor units is obtained, and the frequency of the compressor according to the total capacity value is set. Further, the frequency of the compressor is changed for each set amount of change. In other words, the frequency of the compressor is changed by an appropriate amount of change according to each of the states where the number of the indoor units in the thermo ON state is small and where the number is large. Accordingly, the frequency of the compressor can be changed by the amount of change corresponding to the change in the required capacity, and a stable frequency control of the compressor can be performed.
An air conditioner according to a second aspect of the present invention is the air conditioner according to the first aspect of the present invention, wherein the change amount setting means sets the amount of change to a larger value as the total capacity value is larger.
With this air conditioner, the frequency of the compressor is changed by a larger amount of change as the total capacity value is larger. Accordingly, even when the total capacity value is large, the frequency of the compressor can be rapidly increased.
An air conditioner according to a third aspect of the present invention is the air conditioner according to the first aspect or the second aspect of the present invention, wherein the change amount setting means sets the amount of change in the frequency of the compressor based on a change amount setting table that includes capacity value sections in which the total capacity value of the indoor units is divided into a plurality of ranges and also values of the amount of change specified for each capacity value section.
With this air conditioner, the frequency is changed by the amount of change specified for each capacity value section. Accordingly, when the total capacity value is changed, the amount of change corresponding to the total capacity value after the change can be easily set.
An air conditioner according to a fourth aspect of the present invention is the air conditioner according to any one of the first aspect to the third aspect of the present invention, wherein the change amount setting means sets the amount of change in the frequency of the compressor further taking into account the current frequency of the compressor.

With this air conditioner, the amount of change in the frequency of the compressor is set taking into account not only the total capacity value of the indoor units in the thermo ON state but also the current frequency of the compressor. Accordingly, a further stable frequency control of the compressor can be performed, taking into account a value of the current frequency.

An air conditioner according to a fifth aspect of the present invention is the air conditioner according to the fourth aspect of the present invention, wherein the change amount setting means sets the amount of change to a smaller value as the current frequency of the compressor is higher.

With this air conditioner, the frequency of the compressor is changed by a smaller amount of change as the current frequency of the compressor is higher. Accordingly, a detailed control of the frequency of the compressor becomes possible, and a further stable frequency control of the compressor can be performed.

An air conditioner according to a sixth aspect of the present invention is the air conditioner according to any one of the first aspect to the fifth aspect of the present invention, further comprising an expansion valve, a superheat degree detecting means, an expansion valve opening degree setting means, and an expansion valve opening degree changing means. Together with the compressor, the expansion valve constitutes a refrigerant circuit. The superheat degree detecting means detects the degree of superheat on a suction side of the compressor. The expansion valve opening degree setting means sets the opening degree of the expansion valve based on the change in the frequency of the compressor and the degree of superheat on the suction side of the compressor. The expansion valve opening degree changing means changes the opening degree of the expansion valve to the opening degree set by the expansion valve opening degree setting means.

With this air conditioner, the opening degree of the expansion valve is controlled based on the change in the frequency of the compressor and the degree of superheat on the suction side of the compressor. Accordingly, the opening degree of the expansion valve can be controlled so as to appropriately correspond to the change in the frequency of the compressor.

An air conditioner according to a seventh aspect of the present invention is the air conditioner according to the sixth aspect of the present invention, wherein, in case of increasing the opening degree of the expansion valve, the expansion valve opening degree setting means increases the rate of change in the opening degree of the expansion valve when the degree of superheat exceeds a predetermined value or becomes at least a predetermined value.

With this air conditioner, when the degree of superheat exceeds a predetermined value or becomes at least a predetermined value, the opening degree of the expansion valve is changed by a larger rate of change in the opening degree. Accordingly, the opening degree of the expansion valve can be caused to appropriately follow the increase in the frequency of the compressor.

A control method of an air conditioner according to an eighth aspect of the present invention is a control method of an air conditioner comprising an outdoor unit having a compressor and a plurality of indoor units connected to the outdoor unit and each independently capable of switching between thermo ON/OFF states, the control method comprising a total capacity value obtaining step, a change amount setting step, and a frequency changing step. In the total capacity value obtaining step, a total capacity value of the indoor units in the thermo ON state among the plurality of indoor units is obtained. In the change amount setting step, the amount of change in the frequency of the compressor is set according to the total capacity value. In the frequency changing step, the frequency of the compressor is changed for each amount of change set by the change amount setting means.

With this control method of an air conditioner, the total capacity value of the indoor units in the thermo ON state among the plurality of indoor units is obtained, and the frequency of the compressor according to the total capacity value is set. Further, the frequency of the compressor is changed for each set amount of change. In other words, the frequency of the compressor is changed by an appropriate amount of change according to each of the states where the number of the indoor units in the thermo ON state is small and where the number is large. Accordingly, the frequency of the compressor can be changed by the amount of change corresponding to the change in the required capacity, and a stable frequency control of the compressor can be performed.

<EFFECT OF THE INVENTION>

With the air conditioner according to the first aspect of the present invention, the frequency of the compressor can be changed by the amount of change corresponding to the change in the required capacity, and a stable frequency control of the compressor can be performed.

With the air conditioner according to the second aspect of the present invention, even when the total capacity value is large, the frequency of the compressor can be rapidly increased.

With the air conditioner according to the third aspect of the present invention, the frequency is changed by the amount of change specified for each capacity value section, and thus, when the total capacity value is changed, the amount of change corresponding to the total capacity value after the change can be easily set.

With the air conditioner according to the fourth aspect of the present invention, a further stable frequency control of the compressor can be performed, taking into account not only the total capacity value of the indoor units in the thermo ON state but also a value of the current frequency.

With the air conditioner according to the fifth aspect of the present invention, the frequency of the compressor is changed by a smaller amount of change as the current frequency of the compressor is higher. Thus a detailed control of the frequency of the compressor becomes possible, and a further stable frequency control of the compressor can be performed.

With the air conditioner according to the sixth aspect of the present invention, the opening degree of the expansion valve can be controlled so as to appropriately correspond to the change in the frequency of the compressor.

With the air conditioner according to the seventh aspect of the present invention, when the degree of superheat exceeds a predetermined value or becomes at least a predetermined value, the opening degree of the expansion valve is changed by a larger rate of change in the opening degree, and thus the opening degree of the expansion valve can be caused to appropriately follow the increase in the frequency of the compressor.

With the control method of an air conditioner according to the eighth aspect of the present invention, the frequency of the compressor can be changed by the amount of change corresponding to the change in the required capacity, and a stable frequency control of the compressor can be performed.

**BERIF DESCRIPTION OF THE DRAWINGS**

Figure 1 is a block diagram illustrating the configuration of an air conditioner.
Figure 2 is a refrigerant circuit diagram illustrating the configuration of the air conditioner.
Figure 3 is a control block diagram of the air conditioner.
Figure 4 is a flowchart of an activation control of a compressor.
Figure 5 is a change amount setting table for a cooling operation time.
Figure 6 is a change amount setting table for a heating operation time.
Figure 7 is a flowchart of an activation control of a hot gas bypass circuit opening and closing portion.

**DESCRIPTION OF THE REFERENCE SYMBOLS**

| | |
|---|---|
| 1 | outdoor unit |
| 2a - 2i | indoor units |
| 10 | compressor |
| 15 | outdoor expansion valve (expansion valve) |
| 44 | suction side temperature sensor (superheat |

| | |
|---|---|
| | degree detecting means) |
| 62 | total capacity value obtaining means |
| 63 | change amount setting means |
| 64 | frequency changing means |
| 65 | expansion valve opening degree setting means |
| 66 | expansion valve opening degree changing means |
| 100 | air conditioner |

**BEST MODE FOR CARRYING OUT THE INVENTION**

<CONFIGURATION>

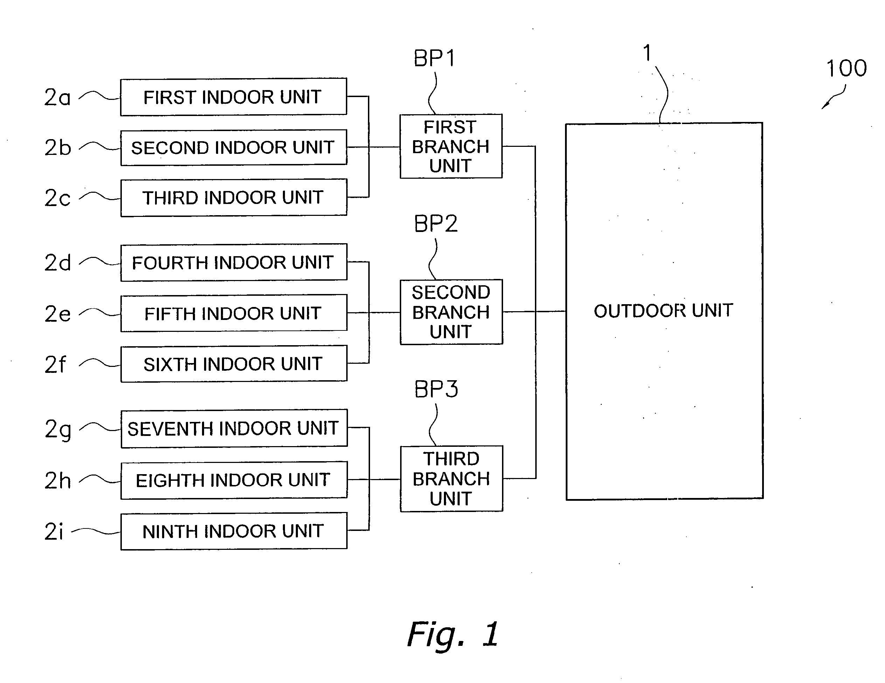

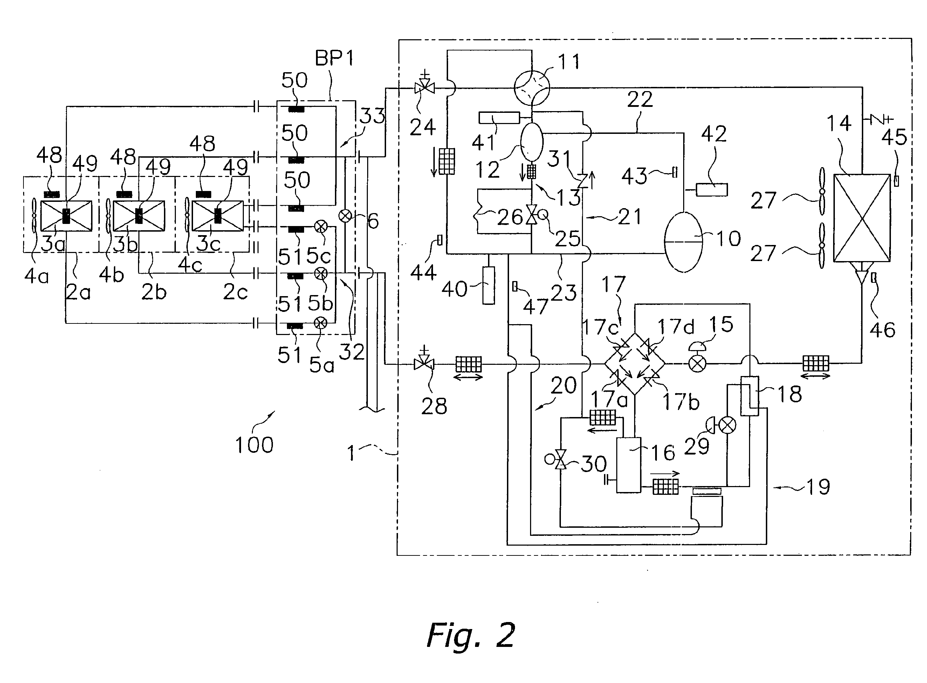

Figure 1 shows a block diagram illustrating the configuration of an air conditioner 100 according to an embodiment of the present invention. This air conditioner 100 is an air conditioner configured to cool and heat the space inside the house, and is a so-called multi-type air conditioner in which a plurality of indoor units 2a - 2i are connected to one outdoor unit 1. The indoor units 2a - 2i are connected to the outdoor unit 1 via branch units BP1 - BP3. In this embodiment, a plurality of the branch units BP1 - BP3 are connected to one outdoor unit 1. Specifically, three branch units BP1 - BP3 from the first branch unit BP1 to the third branch unit BP3 are connected. In addition, a plurality of indoor units are connected to each of the branch units BP1 - BP3. Connected to the first branch unit BP1 are three indoor units 2a - 2c from the first indoor unit 2a to the third indoor unit 2c. Connected to the second branch unit BP2 are three indoor units 2d - 2f from the fourth indoor unit 2d to the sixth indoor unit 2f. Connected to the third branch unit BP3 are three indoor units 2g - 2i from the seventh indoor unit 2g to the ninth indoor unit 2i. Figure 2 shows a refrigerant circuit diagram illustrating the configuration of this air conditioner 100.

<CONFIGURATION OF THE OUTDOOR UNIT>

A refrigerant circuit on the outdoor unit 1 side includes a compressor 10, a switching mechanism 11, an oil separator 12, a hot gas bypass circuit 13, an outdoor heat exchanger 14, an outdoor expansion valve 15 (expansion valve), a receiver 16, a bridge circuit 17, a cooler 18, a subcooling bypass circuit 19, a degassing circuit 20, a pressure equalization circuit 21, and the like.

The compressor 10 is a scroll type compressor driven by an electric motor, and is a device to compress gas refrigerant sucked therein. The operation frequency of the compressor 10 can be variably controlled by an inverter.

The switching mechanism 11 is a mechanism that switches the direction of flow of the refrigerant when switching between an operation in a cooling cycle and an operation in a heating cycle, and comprises a four way valve connected to a discharge pipe 22 and a suction pipe 23 of the compressor 10, a gas side of the outdoor heat exchanger 14, and gas sides of indoor heat exchangers 3a - 3c. During the operation in the cooling cycle, the switching mechanism 11 connects between the discharge side of the compressor 10 and the gas side of the outdoor heat exchanger 14, and also between the suction side of the compressor 10 and a gas shut-off valve 24 (see the solid lines of the switching mechanism 11 in Figure 2; hereinafter this state is referred to as "cooling cycle side state"). In addition, during the operation in the heating cycle, the switching mechanism 11 can connect between the discharge side of the compressor 10 and the gas shut-off valve 24, and also between the suction side of the compressor 10 and the gas side of the outdoor heat exchanger 14 (see the broken lines of the switching mechanism 11 in Figure 2; hereinafter this state is referred to as "heating cycle side state").

The oil separator 12 is a mechanism that separates lubricant oil contained in the refrigerant on the discharge side of the compressor 10 and returns the lubricant oil to the suction side of the compressor 10, and is disposed in the midway of the discharge pipe 22.

The hot gas bypass circuit 13 is a circuit that communicates between the discharge pipe 22 and the suction pipe 23 of the compressor 10, and connects between the suction side and the discharge side of the compressor 10. One end of the hot gas bypass circuit 13 is connected to the oil separator 12, and the other end thereof is connected to the suction pipe 23. Accordingly, the hot gas bypass circuit 13 returns the refrigerant discharged from the compressor 10 to the suction side, and also can function as an oil recovery circuit to return the oil content separated by the oil separator 12 to the suction side of the compressor 10. In addition, the hot gas bypass circuit 13 is disposed with a hot gas bypass circuit opening and closing portion 25 and a capillary 26 that reduces the pressure of the refrigerant that passes therethrough. The hot gas bypass circuit opening and closing portion 25 is a solenoid valve that opens and closes the hot gas bypass circuit 13, and can close and open the flow passage of the refrigerant flowing in the hot gas bypass circuit 13.

The outdoor heat exchanger 14 is a cross-fin tube type heat exchanger, and is a device that exchanges heat between the refrigerant and the air as a heat source. The outdoor unit 1 comprises an outdoor fan 27 that takes in outside air into the outdoor unit 1 and generates an airflow that passes through the outdoor heat exchanger 14 in order to send the air out. The outdoor fan 27 causes the air to pass through the outdoor heat exchanger 14 and thereby causes heat exchange between outside air and the refrigerant flowing in the outdoor heat exchanger 14.

The outdoor expansion valve 15 is connected to the liquid side of the outdoor heat exchanger 14, and is positioned between the bridge circuit 17 (described below) and the outdoor heat exchanger 14. The outdoor expansion valve 15 is a motor valve capable of reducing the pressure of the refrigerant that passes therethrough, and can adjust the flow rate of the refrigerant that passes therethrough as the valve opening degree is controlled.

The receiver 16 is a container for temporarily storing the refrigerant flowing between the outdoor heat exchanger 14 and the indoor heat exchangers 3a - 3c, and is capable of storing refrigerant in a liquid state. The receiver 16 has an inlet on the top of the container and has an outlet on the bottom of the container. The inlet of the receiver 16 is connected to the outdoor expansion valve 15 and a liquid shut-off valve 28 via the bridge circuit 17. In addition, the outlet of the receiver 16 is connected to the outdoor expansion valve 15 and the liquid shut-off valve 28 via the cooler 18 and the bridge circuit 17. The receiver 16 is positioned between the outdoor heat exchanger 14 and the indoor heat exchangers 3a - 3c, on the side opposite to the compressor 10, and positioned between indoor expansion valves 5a - 5c and the outdoor heat exchanger 14. In the direction of flow of the refrigerant in the cooling cycle, the receiver 16 is positioned on the upstream side of the indoor expansion valves 5a - 5c and the downstream side of the outdoor heat exchanger 14.

The bridge circuit 17 is a circuit comprising four check valves 17a - 17d connected between the outdoor expansion valve 15 and the receiver 16, and has a function to flow the refrigerant into the receiver 16 from the inlet of the receiver 16 and also return the refrigerant into between the outdoor heat exchanger 14 and the indoor heat exchangers 3a - 3c from the outlet of the receiver 16 in each of the case where the refrigerant flowing between the outdoor heat exchanger 14 and the indoor heat exchangers 3a - 3c flows into the receiver 16 from the outdoor heat exchanger 14 side and the case where the same flows into the receiver 16 from the indoor heat exchangers 3a - 3c side. Specifically, the check valve 17a is connected such that the refrigerant flowing from the indoor heat exchangers 3a - 3c toward the outdoor heat exchanger 14 is guided to the inlet of the receiver 16. The check valve 17b is connected such that the refrigerant flowing from the outdoor heat exchanger 14 toward the indoor heat exchangers 3a - 3c is guided to the inlet of the receiver 16. The check valve 17c is connected such that the refrigerant flowing from the outlet of the receiver 16 via the cooler 18 can be flowed to the indoor heat exchangers 3a - 3c side. The check valve 17d is connected such that the refrigerant flowing from the outlet of the receiver 16 via the cooler 18 can be flowed to the outdoor heat exchanger 14 side. Accordingly, the refrigerant flowing between the outdoor heat exchanger 14 and the indoor heat exchangers 3a - 3c always flows in from the inlet of the receiver 16, flows out from the outlet of the receiver 16, and is returned into between the outdoor heat exchanger 14 and the indoor heat exchangers 3a - 3c.

The cooler 18 is a double pipe heat exchanger, and is disposed so as to cool the refrigerant condensed in the outdoor heat exchanger 14 and sent to the indoor heat exchangers 3a - 3c. The cooler 18 is connected between the receiver 16 and the bridge circuit 17.

The subcooling bypass circuit 19 is disposed so as to branch a portion of the refrigerant sent from the outdoor heat exchanger 14 to the indoor heat exchangers 3a - 3c and to return the same to the suction side of the compressor 10. Specifically, the subcooling bypass circuit 19 is connected so as to be branched from a portion of a circuit that connects between the outlet of the receiver 16 and the check valve 17d of the bridge circuit 17 and be merged with the suction pipe 23 of the compressor 10 via the cooler 18. Further, the subcooling bypass circuit 19 is disposed with a subcooling bypass expansion valve 29 for adjusting the flow rate of the refrigerant flowing in the subcooling bypass circuit 19. The subcooling bypass expansion valve 29 is a motor valve for adjusting the flow rate of the refrigerant to be flowed into the cooler 18. Accordingly, the refrigerant flowing in a refrigerant circuit is cooled in the cooler 18 by the refrigerant returned from an outlet of the subcooling bypass expansion valve 29 to the suction pipe 23 of the compressor 10.

One end of the degassing circuit 20 is connected to an upper end portion of the receiver 16, and the other end thereof is connected to the subcooling bypass circuit 19 and merged with the suction pipe 23 of the compressor 10. The degassing circuit 20 is a circuit for sending the refrigerant in a gas state inside the receiver 16 to the suction side of the compressor 10. In addition, the degassing circuit 20 is disposed with a degassing circuit opening and closing portion 30. The degassing circuit opening and closing portion 30 is a solenoid valve that opens and closes the degassing circuit 20, and can close and open the flow passage of the refrigerant flowing in the degassing circuit 20.

One end of the pressure equalization circuit 21 is connected between the degassing circuit opening and closing portion 30 in the degassing circuit 20 and the receiver 16, and the other end is connected to the discharge pipe 22. In addition, the pressure equalization circuit 21 is disposed with a pressure equalizing check valve 31 that allows only the circulation of the refrigerant flowing from one end of the pressure equalization circuit 21 to the other end thereof. This pressure equalization circuit 21 is configured to prevent a breakage of the receiver 16 by allowing gas refrigerant to escape when the outside air temperature abnormally rises and the pressure of the receiver 16 becomes too high while the air conditioner 100 is deactivated.

<CONFIGURATION OF THE INDOOR UNIT>

Each of the plurality indoor units 2a - 2c is disposed on a wall of a room, the back of a ceiling, and the like, and blows air-conditioned air into the room. Each of the indoor units 2a - 2c may be disposed in different rooms or at different positions in the same room. Each of the indoor units 2a - 2c is independently capable of turning between thermo ON/OFF states and activating and deactivating the operation. The operating state of each of the indoor units 2a - 2c can be switched individually. The plurality of indoor units 2a - 2c are connected to the outdoor unit 1 via the first branch unit BP1, and the refrigerant sent from the outdoor unit 1 is branched at the first branch unit BP1 and sent to each of the indoor heat exchangers 3a - 3c. In addition, the refrigerant that has flowed through each of the indoor heat exchangers 3a - 3c is again merged at the first branch unit BP 1 and sent to the outdoor unit 1.

The first indoor unit 2a comprises the first indoor heat exchanger 3a and a first indoor fan 4a. The first indoor heat exchanger 3a performs heat exchange between the refrigerant flowing inside and the air. The first indoor fan 4a generates a flow of air blown from the first indoor unit 2a, and sends the air that has undergone heat exchange with the refrigerant flowing in the first indoor heat exchanger 3a into the room.

The second indoor unit 2b comprises the second indoor heat exchanger 3b and a second indoor fan 4b. The second indoor heat exchanger 3b performs heat exchange between the refrigerant flowing inside and the air. The second indoor fan 4b generates a flow of air blown from the second indoor unit 2b and sends the air that has undergone heat exchange with the refrigerant flowing in the second indoor heat exchanger 3b into the room.

The third indoor unit 2c comprises the third indoor heat exchanger 3c and a third indoor fan 4c. The third indoor heat exchanger 3c performs heat exchange between the refrigerant flowing inside and the air. The third indoor fan 4c generates a flow of air blown from the third indoor unit 2c and sends the air that has undergone heat exchange with the refrigerant flowing in the third indoor heat exchanger 3c into the room.

The first indoor heat exchanger 3a, the second indoor heat exchanger 3b, and the third indoor heat exchanger 3c are disposed in parallel in the refrigerant circuit, and are connected to the first branch unit BP 1.

Note that other indoor units 2d - 2i have the same configurations as described above.

<CONFIGURATION OF THE BRANCH UNIT>

The first branch unit BP1 branches the refrigerant sent from one outdoor unit 1 and distributes the same to the plurality of indoor units 2a - 2c. Also, the first branch unit BP1 causes the refrigerant sent from the plurality of indoor units 2a - 2c to be merged together and sends the merged refrigerant to one outdoor unit 1.

The first branch unit BP1 has a liquid branch pipe 32 that is branched into three ways and a gas branch pipe 33 that is branched into three ways. The liquid branch pipe 32 connects between the liquid shut-off valve 28 of the outdoor unit 1 and the liquid sides of the first indoor heat exchanger 3a, the second indoor heat exchanger 3b, and the third indoor heat exchanger 3c. In addition, the gas branch pipe 33 connects between the gas shut-off valve 24 of the outdoor unit 1 and the gas sides of the first indoor heat exchanger 3a, the second indoor heat exchanger 3b, and the third indoor heat exchanger 3c. The first indoor expansion valve 5a, the second indoor expansion valve 5b, and the third indoor expansion valve 5c are disposed between a branch point of the liquid branch pipe 32 and each of the indoor heat exchangers 3a - 3c, respectively. The indoor expansion valves 5a - 5c are disposed in parallel in the refrigerant circuit. Consequently, the refrigerant circuit on the first indoor unit 2a side comprising the first indoor heat exchanger 3a and the first indoor expansion valve 5a, the refrigerant circuit on the second indoor unit 2b side comprising the second indoor heat exchanger 3b and the second indoor expansion valve 5b, and the refrigerant circuit on the third indoor unit 2c side comprising the third indoor heat exchanger 3c and the third indoor expansion valve 5c are disposed in parallel to each other and connected to the refrigerant circuit on the outdoor unit 1 side via the first branch unit BP1. Each of the first indoor expansion valve 5a, the second indoor expansion valve 5b, and the third indoor expansion valve 5c is a motor valve capable of reducing the pressure of the refrigerant that passes therethrough, and can adjust the flow rate of the refrigerant that passes therethrough as the valve opening degree is controlled. Each of the first indoor expansion valve 5a, the second indoor expansion valve 5b, and the third indoor expansion valve 5c can be independently controlled.

Note that a motor valve 6 for adjusting the pressure is disposed between the liquid branch pipe 32 and the gas liquid branch pipe 33.

Other branch units BP2 and BP3 also have the same configurations as described above.

<VARIOUS SENSORS>

The air conditioner 100 comprises various sensors 40-51 such as a pressure sensor, a temperature sensor, and the like disposed in various portions. Below, the various sensors 40 - 51 are described with reference to Figure 2.

The suction pipe 23 of the compressor 10 is disposed with a suction side pressure sensor 40 for detecting the pressure of low pressure gas refrigerant flowing on the suction side of the compressor 10 (hereinafter referred to as "suction side pressure Pe"). The discharge pipe 22 of the compressor 10 is disposed with a discharge side pressure sensor 41 for detecting the pressure of high pressure gas refrigerant flowing on the discharge side of the compressor 10 (hereinafter referred to as discharge side pressure Pc"). In addition, the discharge pipe 22 of the compressor 10 is disposed with a high-pressure pressure switch 42 for detecting an excessive rise of pressure of high pressure gas refrigerant. Further, the discharge pipe 22 of the compressor 10 is disposed with a discharge side temperature sensor 43 for detecting the discharge side temperature Td of the refrigerant on the discharge side of the compressor 10, and the suction pipe 23 of the compressor 10 is disposed with a suction side temperature sensor 44 (superheat degree detecting means) for detecting the suction side temperature Ts of the refrigerant on the suction side of the compressor 10.

In addition, the outdoor fan 27 of the outdoor unit 1 includes an outdoor air temperature sensor 45 disposed at its air inlet for detecting the temperature Ta of the outside air. The outdoor heat exchanger 14 is disposed with an outdoor heat exchanger temperature sensor 46 for detecting the temperature Tb of the refrigerant that corresponds to the condensation temperature of the refrigerant during the cooling operation and that corresponds to the evaporation temperature of the refrigerant during the heating operation.

In addition, the subcooling bypass circuit 19 includes a subcooling bypass circuit temperature sensor 47 disposed at a portion merging with the suction side of the compressor 10 for detecting the temperature Tsh of the refrigerant flowing in the subcooling bypass circuit 19 on an outlet side of the cooler 18 in order to detect the degree of superheat. With this subcooling bypass circuit temperature sensor 47, the degree of superheat on the suction side of the compressor 10 can be detected.

The indoor fans 4a - 4c of the indoor units 2a - 2i includes a room temperature sensor 48 disposed at each air inlet thereof for detecting the temperature Tr of the room air. With this room temperature sensor 48, the temperature of the room to be air conditioned by each of the indoor units 2a - 2i can be detected. In addition, each of the indoor heat exchangers 3a - 3c is disposed with an indoor heat exchanger temperature sensor 49 for detecting the temperature Tn of the refrigerant that corresponds to the evaporation temperature during the cooling operation and that corresponds to the condensation temperature during the heating operation.

Each of the branching portions of the gas branch pipe 33 of the first branch unit BP1 is disposed with a gas pipe temperature sensor 50 for detecting the temperature of the refrigerant that passes through the inside thereof. The gas pipe temperature sensors 50 are disposed between the indoor expansion valves 5a - 5c and the indoor heat exchangers 3a - 3c, respectively. In addition, each of the branching portions of the liquid branch pipe 32 is disposed with a liquid pipe temperature sensor 51 for detecting the temperature of the refrigerant that passes through the inside thereof. The liquid pipe temperature sensors 51 are disposed between the indoor heat exchangers 3a - 3c and the branching portions of the liquid branch pipe 32, respectively.

Note that, as for these various sensors 48-51 disposed at each of the indoor units 2a - 2c and the first branch unit BP1, the seonsors having the same functions are denoted with the same referencing symbols for simplicity.

Note that, although the descriptions of a second branch unit BP2 and a third branch unit BP3, and the indoor units 2d - 2i connected to each of the branch units BP2 and BP3 are omitted in Figure 2, they are disposed with various sensors same as those disposed in the indoor units 2a - 2c connected to the first branch unit BP 1 and the first branch unit BP 1.

<CONTROL UNIT>

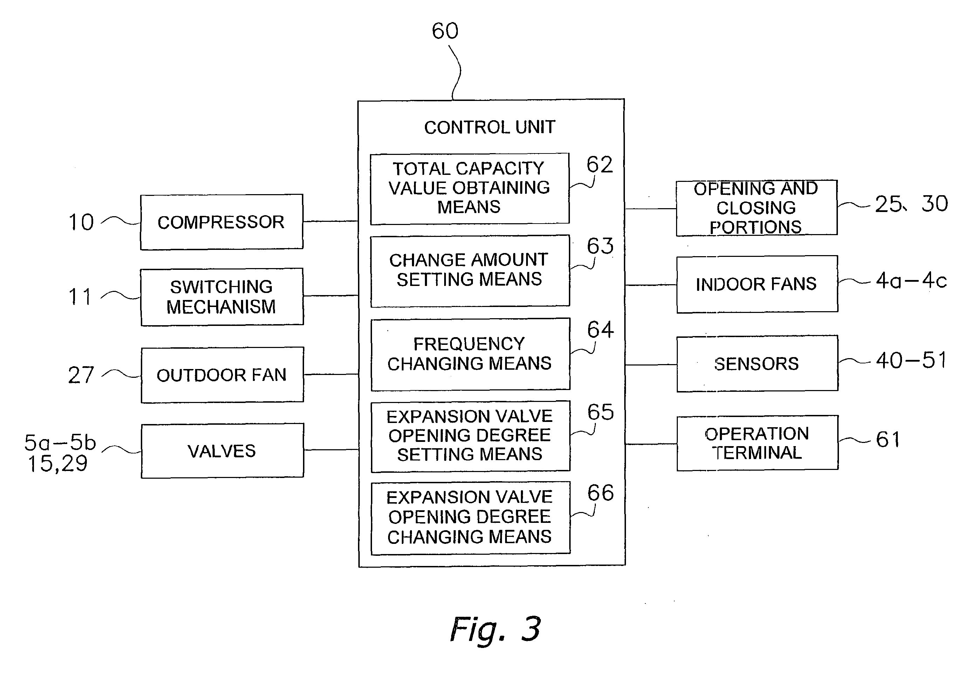

As shown in Figure 3, the air conditioner 100 comprises a control unit 60 that controls various devices such as the compressor 10, the switching mechanism 11, and the like based on signals detected by the above described various sensors 40 - 51 and performs air conditioning operations such as the cooling operation, the heating operation, and the like.

The control unit 60 mainly comprises a microcomputer and a memory, is connected so as to be able to receive input signals from the above described various sensors 40 - 51, and is also capable of receiving command signals input into an operation terminal 61. The control unit 60 is connected so as to be able to control the various devices 4a - 4c, 10, 11, and 27, the valves 5a - 5c, 15, and 29, and the opening and closing portions 25 and 30 based on these input signals and command signals. Further, this control unit 60 can control the various devices 4a - 4c, 10, 11, and 27, the valves 5a - 5c, 15, and 29, and the opening and closing portions 25 and 30, and performs air conditioning operations such as the cooling operation, the heating operation, and the like. Note that, in Figure 3, a plurality of components such as the valves 5a - 5c, the opening and closing portions 25 and 30, the indoor fans 4a - 4c, the indoor expansion valves 5a - 5c, and the like are grouped together and shown as individual blocks. However, each component can be individually controlled.

Below, various controls performed by the control unit 60 are described.

<CONTROLS PERFORMED BY THE CONTROL UNIT>

The control unit 60 can switch between the operation in the cooling cycle and the operation in the heating cycle. The operation in the cooling cycle includes the cooling operation, a defrost operation, an oil recovery operation, and the like. The operation in the heating cycle includes the heating operation. Below, as for the flow of the refrigerant in the indoor units 2a - 2i, the description is given with respect to the first indoor unit 2a to the third indoor unit 2c only. However, the same applies to the other indoor units 2d - 2i.

(HEATING OPERATION CONTROL)

In a heating operation control, a heating process is performed in which the indoor heat exchangers 3a - 3c become condensers. In this heating operation control, the switching mechanism 11 is in the state shown by the broken lines in Figure 2. The outdoor expansion valve 15, the outdoor fan 27, the indoor expansion valves 5a - 5c and the indoor fans 4a - 4c of the indoor units 2a - 2c in the operated state are controlled according to the operation conditions of the indoor units 2a - 2c and the like. The hot gas bypass circuit opening and closing portion 25 is closed, and the subcooling bypass expansion valve 29 is opened and closed in an appropriate manner. The degassing circuit opening and closing portion 30 is opened and closed in an appropriate manner. As the refrigerant circulates in the refrigerant circuit in this state, the indoor heat exchangers 3a - 3c of the indoor units 2a - 2c in the operated state are caused to function as condensers and also the outdoor heat exchanger 14 is caused to function as an evaporator. Accordingly, heated air is blown into the room and the heating operation is performed.

Note that in the above described heating operation, the refrigerant circulates in the refrigerant circuit as described below. Note that, here, the description is given assuming that the first indoor unit 2a is in the thermo ON state and the second indoor unit 2b and the third indoor unit 2c are in the thermo OFF state or in the deactivated state.

First, the refrigerant discharged from the compressor 10 is sent from the switching mechanism 11 to the first indoor heat exchanger 3 a via the gas shut-off valve 24 and the first branch unit BP1. In the first indoor heat exchanger 3a, the refrigerant radiates heat to the room air and condenses. The refrigerant condensed in the first indoor heat exchanger 3a passes through the first indoor expansion valve 5a, the liquid shut-off valve 28, and the bridge circuit 17, and flows into the receiver 16. The refrigerant that has flowed out from the receiver 16 is pressure-reduced by the outdoor expansion valve 15, passes through the bridge circuit 17, and is sent to the outdoor heat exchanger 14. In the outdoor heat exchanger 14, the refrigerant absorbs heat from the outside air and evaporates. The refrigerant evaporated in the outdoor heat exchanger 14 is sucked into the compressor 10 via the switching mechanism 11. The compressor 10 compresses the sucked-in refrigerant and again discharges it.

Note that, in the second indoor unit 2b and the third indoor unit 2c which are deactivated among the indoor units 2a - 2c, their corresponding second indoor expansion valve 5b and third indoor expansion valve 5c are opened by a small opening degree, limiting the inflow of the refrigerant.

The control unit 60 controls the frequency of the compressor 10, the opening degree of the outdoor expansion valve 15, and the like according to a change in the operating state of each of the indoor units 2a - 2c in order to control the capacity.

(COOLING OPERATION CONTROL)

During a cooling operation control, a cooling process is performed in which the indoor heat exchangers 3a - 3c become evaporators. During this cooling operation control, the switching mechanism 11 is in the state shown by the solid lines in Figure 2. The outdoor expansion valve 15 is fully opened, and the outdoor fan 27, the indoor expansion valves 5a - 5c and the indoor fans 4a - 4c of the indoor units 2a - 2c in the operated state are controlled according to the operation conditions and the like of the indoor units 2a - 2c. The hot gas bypass circuit opening and closing portion 25 and the subcooling bypass expansion valve 29 are opened and closed in an appropriate manner. The degassing circuit opening and closing portion 30 is opened and closed in an appropriate manner. As the refrigerant circulates in the refrigerant circuit in this state, the indoor heat exchangers 3a - 3c of the indoor units 2a - 2c in the operated state are caused to function as evaporators and also the outdoor heat exchanger 14 is caused to function as a condenser. Accordingly, cooled air is blown into the room and the cooling operation is performed.

Note that in the above described cooling operation, the refrigerant circulates in the refrigerant circuit as described below. Note that, here, the first indoor unit 2a is in the thermo ON state, and the second indoor unit 2b and the third indoor unit 2c are in the thermo OFF state or in the deactivated state.

First, the refrigerant discharged from the compressor 10 is sent from the switching mechanism 11 to the outdoor heat exchanger 14. In the outdoor heat exchanger 14, the refrigerant radiates heat to the outside air and condenses. The refrigerant condensed in the outdoor heat exchanger 14 passes through the outdoor expansion valve 15 and the bridge circuit 17 and flows into the receiver 16. The refrigerant that has flowed out from the receiver 16 passes through the liquid shut-off valve 28, is pressure-reduced by the first indoor expansion valve 5a in the first branch unit BP1, and is sent to the first indoor heat exchanger 3a. In the first indoor heat exchanger 3a, the refrigerant absorbs heat from the room air and evaporates. The refrigerant evaporated in the first indoor heat exchanger 3a passes through the gas shut-off valve 24 and the switching mechanism 11 and is sucked into the compressor 10. The compressor 10 compresses the sucked-in refrigerant and again discharges the same.

Note that, in the second indoor unit 2b and the third indoor unit 2c which are deactivated among the indoor units 2a - 2c, their respective second indoor expansion valve 5b and third indoor expansion valve 5c are fully closed, limiting the inflow of the refrigerant.

The control unit 60 controls the frequency of the compressor 10, the opening degree of the outdoor expansion valve 15, and the like according to a change in the operating state of each of the indoor units 2a - 2c in order to control the capacity.

(FREQUENCY CONTROL OF THE COMPRESSOR)

Next, the frequency control of the compressor 10 is described.

In the activation control of the compressor 10, the control unit 60 gradually increases the frequency of the compressor 10 until the difference between the discharge side pressure Pc and the suction side pressure Pe exceeds a predetermined value. Note that, when changing the frequency of the compressor 10, the control unit 60 gradually changes the frequency by each predetermined interval. For example, when the minimum operation frequency of the compressor 10 is 52 Hz and this is referred to as a first level, the frequency of each level is defined as follows: a second level = 57 Hz, a third level = 62 Hz, and a fourth level = 68 Hz, in a manner that the frequency increases by each predetermined interval. The frequency of the compressor 10 increases/decreases in this level unit. Note that the differences between the values of the frequency defined for each level do not have to be the same values but are approximate values. In addition, the higher the level is, the higher the frequency is defined.

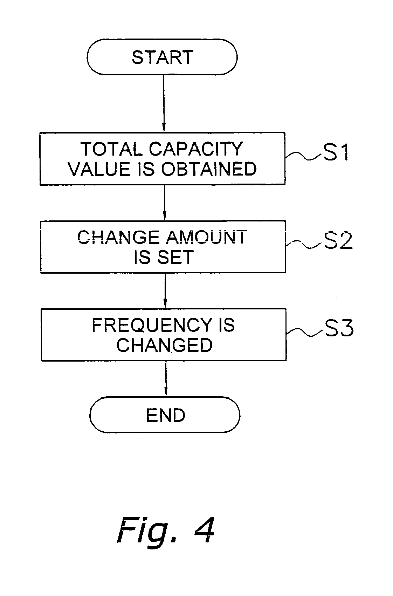

When the difference between the discharge side pressure Pc and the suction side pressure Pe exceeds a predetermined value, a normal control of the compressor 10 is performed. In this normal control, the control unit 60 determines the size of the capacity requirement and calculates the amount of change in the frequency according to the size of the capacity requirement and the frequency of the compressor 10 at that time. As shown in Figure 3, the control unit 60 includes a total capacity value obtaining means 62, a change amount setting means 63, a frequency changing means 64, and the like. Below, the normal control of the compressor 10 is described based on a control flow shown in Figure 4.

First, in a first step S 1 (total capacity value obtaining step), the total capacity value obtaining means 62 obtains the total capacity value of the indoor units 2a - 2i in the thermo ON state among the plurality of indoor units 2a - 2i. The indoor units 2a - 2i store their respective capacity values, and the total capacity value obtaining means 62 calculates the total capacity value of the indoor units in the thermo ON state based on the capacity values stored in each of the indoor units 2a - 2i.

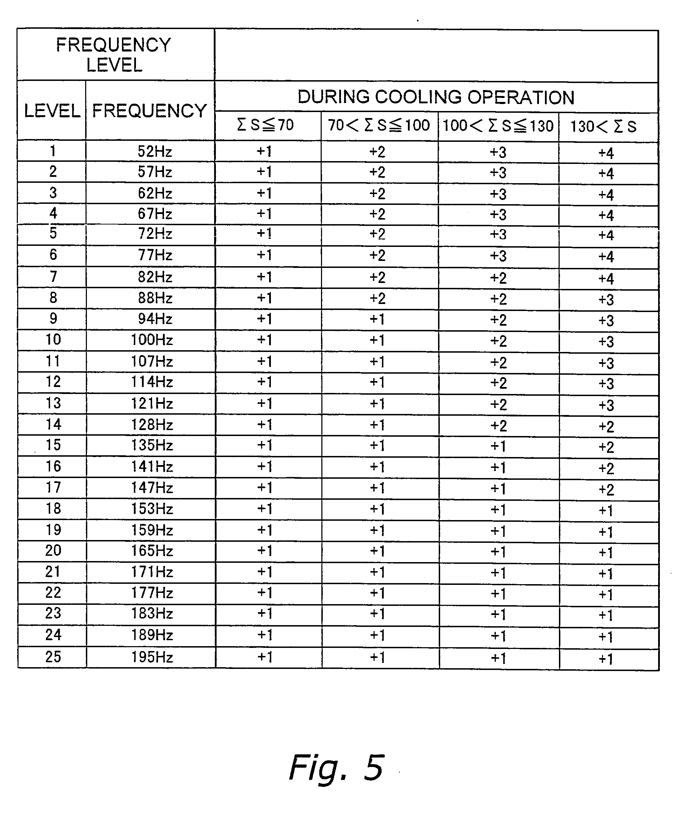

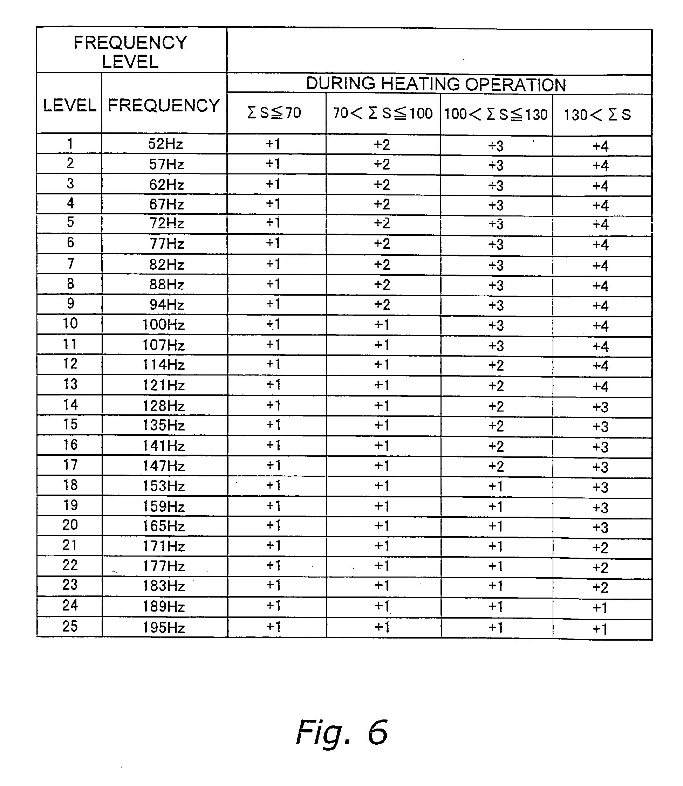

Next, in a second step S2 (change amount setting step), the change amount setting means 63 sets the amount of change in the frequency of the compressor 10 according to the total capacity value and the current frequency of the compressor 10. Then, the process proceeds to a third step S3 (frequency changing step). As shown in Figures 5 and 6, the change amount setting means 63 stores a change amount setting table that includes capacity value sections in which the total capacity value of the indoor units 2a - 2i is divided into a plurality of ranges, and values of the amount of change specified for each capacity value section and for each current frequency, and sets the amount of change in the frequency of the compressor 10 based on this change amount setting table. In this embodiment, the total capacity value section includes four ranges from a first range to a fourth range. Note that the values of the amount of change on the change amount setting table indicate the range of change of the level number. For example, in the case where the value is "+2", the frequency of the compressor 10 is changed to a frequency higher by two levels. With this change amount setting table, a larger amount of change is defined for a capacity value section with a larger total capacity value. Further, a smaller amount of change is defined for a higher current frequency. Consequently, the amount of change is set to a larger value as the total capacity value is larger, and is set to a smaller value as a current frequency is higher. Note that Figure 5 is the change amount setting table for the cooling operation time, and Figure 6 is the change amount setting table for the heating operation time. This air conditioner 100 uses the change amount setting table that is different for the cooling operation time and for the heating operation time.

In the third step S3, the frequency changing means 64 changes the frequency of the compressor 10 for each amount of change set by the change amount setting means 63 at the activation time of the air conditioner 100, and the process proceeds to a fourth step S4. The amount of change in the frequency at this time is the amount of change set by the above described change amount setting means 63.

Below, the normal control of the compressor 10 during the cooling operation of the air conditioner 100 is specifically described by taking a case as an example where the first indoor unit 2a, the second indoor unit 2b, and the third indoor unit 2c are in the thermo ON state and other indoor units 2d - 2i are deactivated. Capacity values of the first indoor unit 2a, the second indoor unit 2b, and the third indoor unit 2c are, respectively, 28, 30, and 40. In addition, it is assumed that the compressor 10 is driven at the minimum operation frequency of 77 Hz.

First, the total capacity value obtaining means 62 calculates the total capacity value of the first indoor unit 2a, the second indoor unit 2b, and the third indoor unit 2c. Here, it is calculated that ΣS = 98. ΣS is the total capacity value. The change amount setting means 63 sets the amount of change based on this total capacity value with reference to the change amount setting table for the cooling operation shown in Figure 5. Here, the current frequency is 77 Hz and also the total capacity value is 98. Therefore, the amount of change is set to "+2." Based on this amount of change, the frequency changing means 64 increases the frequency of the compressor 10 by two orders from the sixth level to the eighth level. Specifically, the frequency of the compressor 10 increases from 77 Hz to 88 Hz. Then, the frequency is repeatedly changed every predetermined time interval until the evaporation pressure or the condensation pressure reaches a target value.

Note that when the number of the indoor units in the thermo ON state changes in the course of the process, the amount of change in the frequency is set according to the total capacity value after the change.

(ACTIVATION CONTROL OF THE OUTDOOR EXPANSION VALVE)

Along with the change in the frequency of the compressor 10 as described above, the opening degree of the outdoor expansion valve 15 is also adjusted. Below, the activation control of the outdoor expansion valve 15 at the activation time of the air conditioner 100 is described.

As shown in Figure 3, the control unit 60 includes an expansion valve opening degree setting means 65 and an expansion valve opening degree changing means 66.

The expansion valve opening degree setting means 65 calculates the opening degree of the outdoor expansion valve 15 using a calculation formula below.

$$EV = EV_0 + w(SH) \times f(Ft'/Ft)$$

EV is the opening degree of the outdoor expansion valve, and $EV_0$ is a predetermined initial opening degree. Here, w(SH) is a weighting function specified by the degree of suction superheat SH, and f(Ft'/Ft) is an opening degree change amount function specified by the rate of change in the frequency Ft'/Ft. Note that Ft is the frequency of the compressor 10 before the change, and Ft' is the frequency of the compressor 10 after the change. In addition, the degree of suction superheat SH is calculated using a formula SH = Ts - Teg, and Teg is the temperature of the saturated gas corresponding to the gas refrigerant on the suction side. Consequently, the expansion valve opening degree setting means 65 sets the opening degree of the outdoor expansion valve 15 based on the rate of change in the frequency Ft'/Ft of the compressor 10 and the degree of suction superheat SH on the suction side of the compressor 10.

In addition, the above described weighting function w(SH) in case of increasing the opening degree of the outdoor expansion valve 15 is specified as follows:
when SH ≤ b, w(SH) = 1.0,
when SH > b, w(SH) = c(c > 1).

The letters b and c are predetermined constant numbers.

Consequently, in the case where the outdoor expansion valve 15 is increased during the activation control of the heating operation, when the degree of suction superheat exceeds a predetermined value, the weighting function has a value greater than 1, and the amount of change in the opening degree of the outdoor expansion valve 15 increases compared to the case where the degree of suction superheat is small. Note that the weighting function may be defined not only during the activation control of the heating operation but also during the activation control of the cooling operation in the same manner as described above.

The expansion valve opening degree changing means 66 changes the opening degree of the outdoor expansion valve 15 to the above described opening degree set by the expansion valve opening degree setting means 65.

The activation control of the outdoor expansion valve 15 is performed as described above.

Note that the control unit 60 is capable of calculating the opening degree also in the activation control of the subcooling bypass expansion valve 29 at the activation time of the cooling operation of the air conditioner 100 using the same calculation formula as described above.

(ACTIVATION CONTROL OF THE HOT GAS BYPASS CIRCUIT OPENING AND CLOSING PORTION)

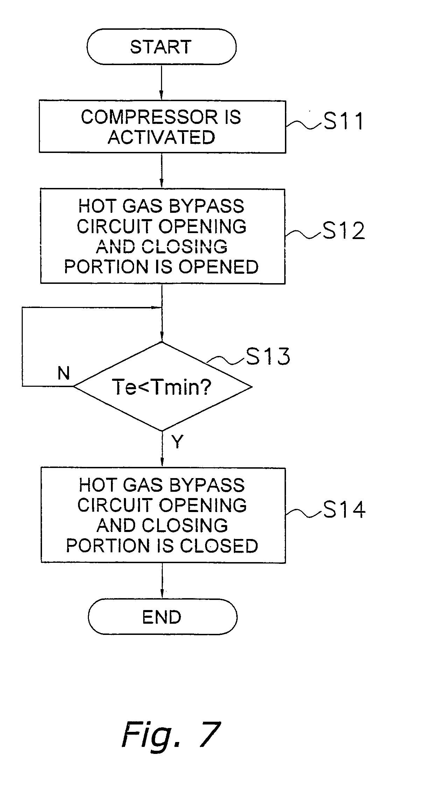

Next, the activation control of the hot gas bypass circuit opening and closing portion 25 at the activation time of the air conditioner 100 is described. The control unit 60 first opens the hot gas bypass circuit opening and closing portion 25 at the activation time of the compressor 10, determines the wet condition of the refrigerant on the suction side of the compressor 10, and then closes the hot gas bypass circuit opening and closing portion 25 based on a determination result of the wet condition of the refrigerant. Below, a description is given based on Figure 7.

First, the compressor 10 is activated in an eleventh step S11. The compressor 10 is controlled by the activation control as described above.

In addition, together with the activation of the compressor 10, in a twelfth step S12, the hot gas bypass circuit opening and closing portion 25 is opened. Accordingly, a portion of the refrigerant discharged from the compressor 10 is returned to the suction side, preventing liquid backflow in the compressor 10.

Next, in a thirteenth step S13, the wet condition is determined. Here, the wet condition of the refrigerant on the suction side of the compressor 10 is determined based on the pressure corresponding saturation temperature Te of the pressure Pe on the suction side of the compressor 10 and the room temperature Tmin. In other words, whether or not Te < Tmin is satisfied is determined. Note that the room temperature Tmin is the minimum value among the room temperatures detected in the indoor units in the thermo ON state. In addition, the pressure corresponding saturation temperature Te is obtained from the suction side pressure Pe detected by the suction side pressure sensor 40. When Te < Tmin is satisfied, the process proceeds to a fourteenth step S 14. When Te < Tmin is not satisfied, the thirteenth step S13 is repeated.

In the fourteenth step S 14, the hot gas bypass circuit opening and closing portion 25 is closed, and then the process proceeds to the normal control.

<CHARACTERISTICS>

(1) With this air conditioner 100, the frequency control of the compressor 10 as described above is performed, and the increment of the frequency of the compressor 10 is increased as the required supply capacity is larger. In addition, on the other hand, the increment of the frequency of the compressor 10 is decreased as the required supply capacity is smaller. Accordingly, overshooting of the frequency is prevented and hunting of the frequency can be prevented. Accordingly, at the activation time of the compressor 10, the compressor 10 can be stably controlled. In addition, the rising performance of the air conditioner 100 is improved, which improves comfort. Further, it becomes possible to supply capacity according to the load, which improves the follow-up performance of the control system with respect to the change in the number of the indoor units to be operated.

(2) With this air conditioner 100, the activation control of the outdoor expansion valve 15 as described above is performed. When the degree of suction superheat is large, increment of the opening degree of the outdoor expansion valve 15 is increased. Accordingly, the follow-up performance of the opening degree control of the outdoor expansion valve 15 with respect to the increment of the frequency of the compressor 10 is improved, which improves the rising performance of the air conditioner 100.

(3) With this air conditioner 100, the activation control of the hot gas bypass circuit opening and closing portion 25 as described above is performed. Accordingly, a period of time in which the hot gas bypass circuit opening and closing portion 25 is opened can be shortened compared to the case where the timing to close the hot gas bypass circuit opening and closing portion 25 is determined solely by the fact that a predetermined period of time has elapsed. In addition, the suction superheat is determined, which therefore can improve the reliability of the liquid backflow prevention.

<OTHER EMBODIMENTS>

(1) With the above embodiment, nine indoor units 2a - 2i are connected to one outdoor unit 1, however, the number of the indoor units connected to one outdoor unit 1 is not limited to the above number, and a smaller or larger number of the indoor units may be connected. In addition, likewise, the number of branch units and the number of the indoor units connected to one branch unit are not limited to the numbers as described above.

(2) With the above embodiment, the indoor units 2a - 2i are connected to the outdoor unit 1 via the branch units BP1 - BP3. However, the indoor units 2a - 2i not comprising the branch units BP1 - BP3 but respectively including the built-in indoor expansion valves 5a - 5c may be directly connected to the outdoor unit 1.

(3) The total capacity value calculated in the activation control of the compressor 10 may be any value as long as the value indicates the change in the load along with the change in the number of indoor units in the thermo ON state. For example, it may be a total number of the indoor units in the thermo ON state.

(4) With the above embodiment, the change amount setting table is referred to when setting the amount of change in the frequency. However, the amount of change in the frequency may be calculated using a predetermined calculation formula.

(5) With the above embodiment, a condition in which the weighting function w(SH) is defined to a constant number c is when SH > b is satisfied. However, instead of this conditional expression, a different conditional expression SH ≥ b may be used.

(6) With the above embodiment, whether or not Te < Tmin is satisfied is determined when determining the wet condition. However, instead of this condition, a different conditional expression Te ≤ Tmin may be used. In addition, a different condition may be used as long as it is a condition in which it can be assumed that the suction superheat is added to the refrigerant flowing in the suction pipe 23.

(7) With the above embodiment, the plurality of indoor units 2a - 2i are connected to one outdoor unit 1. However, the above described activation control of the outdoor expansion valve 15 and the above described activation control of the hot gas bypass circuit opening and closing portion 25 are effective also in an air conditioner in which only one indoor unit is connected to one outdoor unit.

**INDUSTRIAL APPLICABILITY**

The present invention enables a stable frequency control of a compressor in an air conditioner in which a plurality of indoor units are connected to an outdoor unit, and is therefore useful as an air conditioner.

**Claims**

1. An air conditioner (100) comprising an outdoor unit (1) having a compressor (10) and a plurality of indoor units (2a - 2i) connected to the outdoor unit (1) and each independently capable of switching between thermo ON/OFF states, comprising:

   a total capacity value obtaining means (62) configured to obtain a total capacity value of the indoor units (2a - 2i) in the thermo ON state among the plurality of indoor units (2a - 2i);
a change amount setting means (63) configured to set an amount of change in the frequency of the compressor (10) according to the total capacity value; and
a frequency changing means (64) configured to change the frequency of the compressor (10) for each amount of change set by the change amount setting means (63).

2. The air conditioner (100) according to claim 1 wherein the change amount setting means (63) sets the amount of change to a larger value as the total capacity value is larger.

3. The air conditioner (100) according to claim 1 or claim 2, wherein the change amount setting means (63) sets an amount of change in the frequency of the compressor (10) based on a change amount setting table that includes capacity value sections in which a total capacity value of the indoor units (2a - 2i) is divided into a plurality of ranges and also values of the amount of change specified for each capacity value section.

4. The air conditioner (100) according to any one of claim 1 to claim 3, wherein the change amount setting means (63) sets an amount of change in the frequency of the compressor (10) further taking into account the current frequency of the compressor (10).

5. The air conditioner (100) according to claim 4, wherein the change amount setting means (63) sets the amount of change to a smaller value as the current frequency of the compressor (10) is higher.

6. The air conditioner (100) according to any one of claim 1 to claim 5, further comprising an expansion valve (15) that constitutes a refrigerant circuit together with the compressor (10),
a superheat degree detecting means (44) configured to detect a degree of superheat on a suction side of the compressor (10),
an expansion valve opening degree setting means (65) configured to set an opening degree of the expansion valve (15) based on the change in the frequency of the compressor (10) and a degree of superheat on a suction side of the compressor (10), and
an expansion valve opening degree changing means (66) configured to change an opening degree of the expansion valve (15) to an opening degree set by the expansion valve opening degree setting means (65).

7. The air conditioner (100) according to claim 6, wherein in case of increasing the opening degree of the expansion valve, the expansion valve opening degree setting means (65) increases the rate of change in an opening degree of the expansion valve (15) when the degree of superheat exceeds a predetermined value or becomes at least a predetermined value.

8. A control method of an air conditioner (100) comprising an outdoor unit (1) having a compressor (10) and a plurality of indoor units (2a - 2i) connected to the outdoor unit (1) and each independently capable of switching between thermo ON/OFF states, comprising:

a total capacity value obtaining step (S1) in which a total capacity value of the indoor units (2a - 2i) in the thermo ON state among the plurality of indoor units (2a - 2i) is obtained;
a change amount setting step (S2) in which an amount of change in the frequency of the compressor (10) is set according to the total capacity value; and
a frequency changing step (S3) in which the frequency of the compressor (10) is changed for each amount of change set by the change amount setting means (63).

BP1

2a — FIRST INDOOR UNIT

2b — SECOND INDOOR UNIT

2c — THIRD INDOOR UNIT

FIRST
BRANCH
UNIT

1

BP2

2d — FOURTH INDOOR UNIT

2e — FIFTH INDOOR UNIT

2f — SIXTH INDOOR UNIT

SECOND
BRANCH
UNIT

OUTDOOR UNIT

100

BP3

2g — SEVENTH INDOOR UNIT

2h — EIGHTH INDOOR UNIT

2i — NINTH INDOOR UNIT

THIRD
BRANCH
UNIT

*Fig. 1*

Fig. 2

**60**

**CONTROL UNIT**

| TOTAL CAPACITY VALUE OBTAINING MEANS | 62 |

| CHANGE AMOUNT SETTING MEANS | 63 |

| FREQUENCY CHANGING MEANS | 64 |

| EXPANSION VALVE OPENING DEGREE SETTING MEANS | 65 |

| EXPANSION VALVE OPENING DEGREE CHANGING MEANS | 66 |

10 — COMPRESSOR

11 — SWITCHING MECHANISM

27 — OUTDOOR FAN

5a—5b 15,29 — VALVES

OPENING AND CLOSING PORTIONS — 25、30

INDOOR FANS — 4a—4c

SENSORS — 40—51

OPERATION TERMINAL — 61

*Fig. 3*

EP 1 881 277 A1

Fig. 4

| FREQUENCY LEVEL | | DURING COOLING OPERATION | | | |
|---|---|---|---|---|---|
| LEVEL | FREQUENCY | $\Sigma S \leqq 70$ | $70 < \Sigma S \leqq 100$ | $100 < \Sigma S \leqq 130$ | $130 < \Sigma S$ |
| 1 | 52Hz | +1 | +2 | +3 | +4 |
| 2 | 57Hz | +1 | +2 | +3 | +4 |
| 3 | 62Hz | +1 | +2 | +3 | +4 |
| 4 | 67Hz | +1 | +2 | +3 | +4 |
| 5 | 72Hz | +1 | +2 | +3 | +4 |
| 6 | 77Hz | +1 | +2 | +3 | +4 |
| 7 | 82Hz | +1 | +2 | +2 | +4 |
| 8 | 88Hz | +1 | +2 | +2 | +3 |
| 9 | 94Hz | +1 | +1 | +2 | +3 |
| 10 | 100Hz | +1 | +1 | +2 | +3 |
| 11 | 107Hz | +1 | +1 | +2 | +3 |
| 12 | 114Hz | +1 | +1 | +2 | +3 |
| 13 | 121Hz | +1 | +1 | +2 | +3 |
| 14 | 128Hz | +1 | +1 | +2 | +2 |
| 15 | 135Hz | +1 | +1 | +1 | +2 |
| 16 | 141Hz | +1 | +1 | +1 | +2 |
| 17 | 147Hz | +1 | +1 | +1 | +2 |
| 18 | 153Hz | +1 | +1 | +1 | +1 |
| 19 | 159Hz | +1 | +1 | +1 | +1 |
| 20 | 165Hz | +1 | +1 | +1 | +1 |
| 21 | 171Hz | +1 | +1 | +1 | +1 |
| 22 | 177Hz | +1 | +1 | +1 | +1 |
| 23 | 183Hz | +1 | +1 | +1 | +1 |
| 24 | 189Hz | +1 | +1 | +1 | +1 |
| 25 | 195Hz | +1 | +1 | +1 | +1 |

*Fig. 5*

| FREQUENCY LEVEL | | DURING HEATING OPERATION | | | |
|---|---|---|---|---|---|
| LEVEL | FREQUENCY | $\Sigma S \leqq 70$ | $70 < \Sigma S \leqq 100$ | $100 < \Sigma S \leqq 130$ | $130 < \Sigma S$ |
| 1 | 52Hz | +1 | +2 | +3 | +4 |
| 2 | 57Hz | +1 | +2 | +3 | +4 |
| 3 | 62Hz | +1 | +2 | +3 | +4 |
| 4 | 67Hz | +1 | +2 | +3 | +4 |
| 5 | 72Hz | +1 | +2 | +3 | +4 |
| 6 | 77Hz | +1 | +2 | +3 | +4 |
| 7 | 82Hz | +1 | +2 | +3 | +4 |
| 8 | 88Hz | +1 | +2 | +3 | +4 |
| 9 | 94Hz | +1 | +2 | +3 | +4 |
| 10 | 100Hz | +1 | +1 | +3 | +4 |
| 11 | 107Hz | +1 | +1 | +3 | +4 |
| 12 | 114Hz | +1 | +1 | +2 | +4 |
| 13 | 121Hz | +1 | +1 | +2 | +4 |
| 14 | 128Hz | +1 | +1 | +2 | +3 |
| 15 | 135Hz | +1 | +1 | +2 | +3 |
| 16 | 141Hz | +1 | +1 | +2 | +3 |
| 17 | 147Hz | +1 | +1 | +2 | +3 |
| 18 | 153Hz | +1 | +1 | +1 | +3 |
| 19 | 159Hz | +1 | +1 | +1 | +3 |
| 20 | 165Hz | +1 | +1 | +1 | +3 |
| 21 | 171Hz | +1 | +1 | +1 | +2 |
| 22 | 177Hz | +1 | +1 | +1 | +2 |
| 23 | 183Hz | +1 | +1 | +1 | +2 |
| 24 | 189Hz | +1 | +1 | +1 | +1 |
| 25 | 195Hz | +1 | +1 | +1 | +1 |

*Fig. 6*

Fig. 7

## INTERNATIONAL SEARCH REPORT

| International application No. |
| --- |
| PCT/JP2006/307738 |

A.  CLASSIFICATION OF SUBJECT MATTER
*F24F11/02(2006.01)i*

According to International Patent Classification (IPC) or to both national classification and IPC

B.  FIELDS SEARCHED

Minimum documentation searched (classification system followed by classification symbols)
F24F11/02

Documentation searched other than minimum documentation to the extent that such documents are included in the fields searched
Jitsuyo Shinan Koho         1922-1996    Jitsuyo Shinan Toroku Koho    1996-2006
Kokai Jitsuyo Shinan Koho   1971-2006    Toroku Jitsuyo Shinan Koho    1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2002-71192 A  (Daikin Industries, Ltd.), 08 March, 2002 (08.03.02), Full text (Family: none) | 1-8 |

☐  Further documents are listed in the continuation of Box C.          ☐  See patent family annex.

| | |
| --- | --- |
| *      Special categories of cited documents: <br> "A"   document defining the general state of the art which is not considered   to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| 18 July, 2006 (18.07.06) | 01 August, 2006 (01.08.06) |

| Name and mailing address of the ISA/ <br> Japanese Patent Office | Authorized officer |
| --- | --- |
| Facsimile No. | Telephone No. |

Form PCT/ISA/210 (second sheet) (April 2005)

**EP 1 881 277 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000241001 A